# EUROPEAN PATENT APPLICATION

(11) **EP 3 139 055 A1**
(43) Date of publication of application: **08.03.2017**
(21) Application number: 16186945.8
(22) Date of filing: 02.09.2016
(51) Int. Cl.: F16D 43/18, H02K 7/108

(54) **FLUID DRIVING DEVICE AND MOTOR ASSEMBLY THEREOF**

(30) Priority: 02.09.2015 CN 201510556394; 27.11.2015 CN 201510856741
(71) Applicant: Johnson Electric S.A., 3280 Murten (CH)
(72) Inventor: Li, Yue, Shatin, N.T. (HK); Liu, Li Sheng, Shatin, N.T. (HK); Zhou, Chui You, Shatin, N.T. (HK); Wang, Yong, Shatin, N.T. (HK); Zhang, Ya Ming, Shatin, N.T. (HK); Li, Gang, Shatin, N.T. (HK); Li, Yong, Shatin, N.T. (HK); Zhang, Wei, Shatin, N.T. (HK); Chai, Jie, Shatin, N.T. (HK)
(74) Representative: Hocking, Adrian Niall

(57) **Abstract**

A motor assembly includes a single phase motor (1) and a friction clutch (2). The single phase motor (1) includes a stator (30) and a rotor (40). The friction clutch (2) includes a pressing member (24) rotating with the rotor (40), and a connecting member (26) to be connected to a load. wherein when the pressing member (26) rotates, the pressing member (24) generates an axial or radial movement to thereby exert a pressing force to the connecting member (26) to cause the connecting member (26) to rotate due to a frictional force generated between the pressing member (24) and the connecting member (26). The present invention further provides a fluid driving device incorporating the motor assembly.

## Description

### FIELD OF THE INVENTION

The present invention relates to the field of fluid driving devices, and in particular to a motor assembly and a fluid driving device employing the motor assembly.

### BACKGROUND OF THE INVENTION

When a motor drives an impeller of a blower, water pump, or the like, to rotate, if the startup load of the blower or water pump is too large, the motor may experience startup failure or may be damaged at the moment of motor startup because the motor is not able to provide a sufficient rotational torque.

When the motor is a single phase motor, the above problem may occur more easily.

Therefore, an improved technical solution is urgently desired.

### SUMMARY OF THE INVENTION

Thus, there is a desire for a motor assembly which can avoid the startup failure. There is also a desire for a fluid driving device employing the motor assembly.

In one aspect, a motor assembly is provided which includes a single phase motor and a friction clutch. The single phase motor includes a stator and a rotor. The friction clutch includes a pressing member rotating with the rotor, and a connecting member to be connected to a load. wherein when the pressing member rotates, the pressing member generates an axial or radial movement to thereby exert a pressing force to the connecting member to cause the connecting member to rotate due to a frictional force generated between the pressing member and the connecting member.

Preferably, the stator comprises a stator core and a winding wound around the stator core, the stator and the rotor being radially spaced to define an air gap, the stator core comprising a plurality of teeth extending radially outwardly, with each two adjacent teeth defining a winding slot there between, a radial end face of the tooth facing toward the rotor forming a pole face, a circumferential distance between the pole faces of two adjacent teeth having a width less than five times of a minimum radial width of the air gap.

Preferably, the circumferential distance between the pole faces of two adjacent teeth is between one to three times of the minimum radial width of the air gap,

Preferably, the motor is an inner-rotor motor, the rotor comprises rotary shaft, a rotor core fixed to the rotary shaft, and a permanent magnet attached to the rotor core.

Preferably, the motor is an outer-rotor motor, the rotor comprises a rotary shaft, a magnetic-conductive housing fixed to the rotary shaft, and a permanent magnet attached to the magnetic-conductive housing.

Preferably, the friction clutch is a centrifugal friction clutch, and the pressing member is a centrifugal body. When the rotor rotates, the centrifugal body generates a radial displacement under a centrifugal force, thereby directly or indirectly exerting the pressing force to the connecting member.

Preferably, the centrifugal body includes a sleeve ring fixed relative to the fixing member and a plurality of centrifugal plates disposed or formed on the sleeve ring. Distal ends of the centrifugal plates are free ends which flare radially outwardly and abut against the load connecting member, such that the load connecting member is driven to rotate by means of the frictional force.

Preferably, the motor assembly further comprises a positioning member for axially positioning the load connecting member.

Preferably, the motor assembly further comprises a positioning pressing block disposed within the centrifugal plates to support the centrifugal plates.

Preferably, the plurality of centrifugal plates extends from a circumference of the sleeve ring in an axial direction of the motor.

Preferably, a groove is formed at a radial inner side of a joint between the centrifugal plate and the sleeve ring for facilitating the centrifugal plate deforming and flaring outwardly.

The present invention further provides a fluid driving device including a driving body and a motor assembly. The motor assembly is any one described above. The driving wheel is connected with the single phase motor through the friction clutch, and the driving body and the load connecting member are connected or formed into an integral structure.

### BRIEF DESCRIPTION OF THE DRAWINGS

In order to more clearly describe the technical solutions in the prior art or the embodiments of the present invention, the accompanying drawings to be used in the descriptions of the prior art or the embodiments are briefly introduced as follows. Obviously, the following accompanying drawings just illustrate some embodiments of the present invention, and people skilled in the art can obtain other drawings from these drawings without paying creative efforts.
Fig. 1 illustrates a first implementation of a motor assembly according to one embodiment of the present invention.
Fig. 2 is a sectional view of the first implementation of the motor assembly according to the embodiment of the present invention.
Fig. 3 is an assembled view of a second stop plate and a centrifugal part of the embodiment of the present invention.
Fig. 4 illustrates the centrifugal part of the embodiment of the present invention.
Fig 5 illustrates a blower according to one embodiment of the present invention.
Fig. 6 illustrates a second implementation of a motor assembly according to one embodiment of the present invention.
Fig. 7 illustrates a single phase motor used in the motor assembly according to one embodiment of the present invention.
Fig. 8 is a sectional view of the single phase motor of Fig. 7, with the stator winding removed for clearer illustration of an interior construction.
Fig. 9 is an enlarged view of a boxed portion of Fig. 8.

### DETAILED DESCRIPTION OF THE PREFERRED EMBODIMENTS

The technical solutions of the embodiments of the present invention will be clearly and completely described as follows with reference to the accompanying drawings. Apparently, the embodiments as described below are merely part of, rather than all, embodiments of the present invention. Based on the embodiments of the present disclosure, any other embodiment obtained by a person skilled in the art without paying any creative effort shall fall within the protection scope of the present invention.

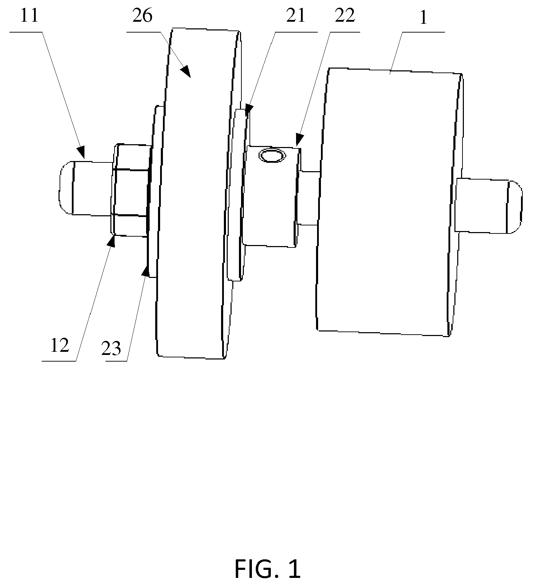

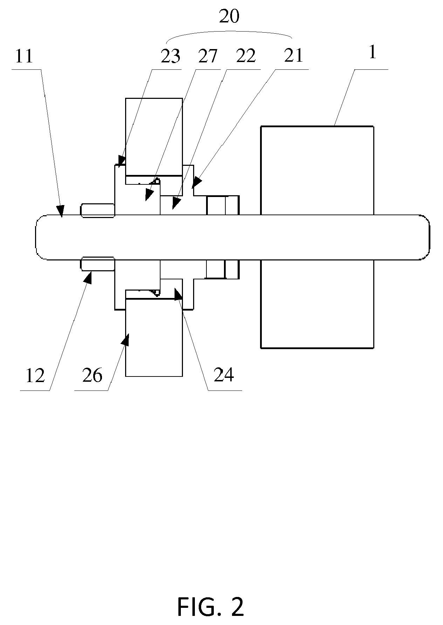

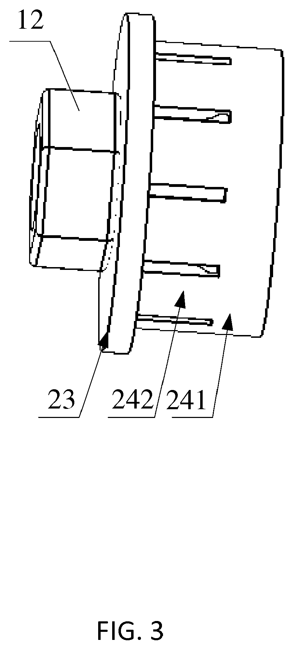

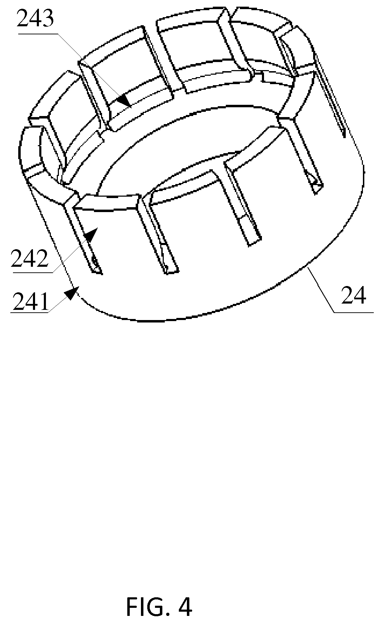

Fig. 1 illustrates a first implementation of a motor assembly according to one embodiment of the present invention. Fig. 2 is a sectional view of the first implementation of the motor assembly according to one embodiment of the present invention. Fig. 3 is an assembled view of a second stop plate and a centrifugal part of one embodiment of the present invention. Fig. 4 illustrates the centrifugal part of one embodiment of the present invention.

A friction clutch in accordance with one embodiment of the present invention is a centrifugal friction clutch which includes a centrifugal part 24 and a loading wheel 26. The centrifugal part 24 includes a sleeve ring 241 and a centrifugal plate 242. The sleeve ring 241 is configured to be fixed to the rotary shaft 11. The centrifugal plate 242 is disposed on the sleeve ring 241. A distal end of the centrifugal plate 242 is a free end. As the rotary shaft 11 rotates, the centrifugal part 24 rotates along with the rotary shaft 11. The centrifugal plate 242 tilts in a direction away from an axis of the sleeve ring 241 under a centrifugal force. The loading wheel 26 is attached around an outer side of the centrifugal part 24. That is, the loading wheel 26 has an inner hole in which the centrifugal part 24 is received. When the centrifugal part 24 rotates with the rotary shaft 11, the free end of the centrifugal plate 242 flares radially outwardly to abut against an inner wall of the loading wheel 26 and, as a result, the loading wheel 26 is driven to rotate by a frictional force.

In the centrifugal friction clutch of the embodiment of the present invention, at startup of the motor 1, the centrifugal part 24 rotates along with the rotary shaft 11. When the rotational speed of the rotary shaft 11 is low, the free end of the centrifugal plate 242 flares radially outwardly to a small extent because the centrifugal plate 242 is subject to a small centrifugal force, such that a frictional force between the centrifugal plate 242 and the loading wheel 26 is small or even zero, and the centrifugal part 24 slides relative to the loading wheel 26. As the rotational speed of the rotary shaft 11 increases, the centrifugal force applied to the centrifugal plate 242 increases, and the free end of the centrifugal plate 242 tilts in the direction away from the axis of the sleeve ring 241. The centrifugal part 24 is received in the inner hole of the loading wheel 26, and the tilted centrifugal plate 242 contacts a wall of the inner hole, such that the frictional force between the centrifugal part 24 and the loading wheel 26 increases accordingly. When the frictional is large enough, the centrifugal part 24 drives the loading wheel 26 to rotate synchronously.

By means of the above configuration, the frictional force between the centrifugal part 24 and the loading wheel 26 is small or even no frictional force exists therebetween at startup of the motor 1 when the rotational speed of the rotary shaft 11 is low. Because the loading wheel 26 and the load are directly or indirectly connected, the load is stationary at the startup of the motor 1, such that the centrifugal part 24 and the loading wheel 26 slide relative to each other to form a sliding friction pair at the startup of the motor 1. As the rotational speed of the rotary shaft 11 of the motor 1 increases, the centrifugal force applied to the centrifugal plate 242 increases, and the frictional force between the centrifugal part 24 and the loading wheel 26 also increases. The amount of relative sliding movement between the centrifugal part 24 and the loading wheel 26 decreases until the centrifugal part 24 and the loading wheel 26 become stationary relative to each other so that the motor drives the loading wheel 26 to rotate synchronously through the centrifugal friction clutch. In the centrifugal friction clutch of the embodiment of the present invention, the frictional force between the centrifugal part 24 and the loading wheel 26 is proportional to a square of the rotational speed of the rotary shaft 11. When at low speed (at startup of the motor 1), the centrifugal plate 242 and the loading wheel 26 slide relative to each other, which reduces the rotational inertia and startup load torque applied to the rotary shaft 11, reduces the vibrational noises at startup of the motor 1, and avoids the startup failure of the motor 1.

It should be understood that the distal end of the centrifugal plate 242 is one end of the centrifugal plate 242 that is not connected with the sleeve ring 241. Preferably, one end of the centrifugal plate 242 is connected with one end of the sleeve ring 241, and one end of the centrifugal plate 242 away from the sleeve ring 241 is the distal end of the centrifugal plate 242. Alternatively, the centrifugal plate 242 may also be disposed on an outer surface of the sleeve ring 241.

The embodiment of the present invention further provides a positioning member 20 for axially positioning the loading wheel 26. By providing the positioning member 20, the loading wheel 26 can be axially positioned, which avoids wobble of the loading wheel 26.

Referring to Fig. 1 and Fig. 2, in a first embodiment, the positioning member 20 includes a positioning shaft sleeve 22 fixed on the rotary shaft 11 and a first stop plate 21 fixedly connected with the positioning shaft sleeve 22. By means of the above configuration, the first stop plate 21 and the positioning shaft sleeve 22 achieve the axial positioning to the loading wheel 26 and facilitate mounting of the positioning member. In assembly of the loading wheel 26 to the rotary shaft 11, an end face of one side of the loading wheel 26 toward an assembling direction contacts the first stop plate 21.

In this embodiment, the inner hole of the loading wheel 26 is a circular cylindrical hole. In order to prevent the loading wheel 26 from moving in a direction opposite to the assembling direction, the positioning member 20 further includes a second stop plate 23 for being fixed on the rotary shaft 11. The second stop plate 23 is disposed at one end of the loading wheel 26 away from the first stop plate 21. The first stop plate 21 is disposed at one end of the loading wheel 26, and the second stop plate 23 is disposed at the other end of the loading wheel 26, such that the loading wheel 26 can be axially positioned. Preferably, an axial length of the inner hole of the loading wheel 26 is the same as an axial length of the centrifugal part 24, such that the centrifugal part 24 can be axially positioned by means of the first stop plate 21 and the second stop plate 23.

The positioning member 20 further includes a positioning ring 27 fixedly connected with the second stop plate 23. An outer surface of the positioning ring 27 contacts an inner surface of the centrifugal plate 242. The positioning ring 27 supports the centrifugal plate 242 and prevents the centrifugal plate 242 from bending toward a center of the centrifugal part 24.

Preferably, the positioning ring 27 and the second stop plate 23 are formed into an integral structure. Through this configuration, only one of the positioning ring 27 and the second stop plate 23 needs to be fixed relative to the rotary shaft 11. In addition, separate fabrication and mounting of the positioning ring 27 and the second stop plate 23 is voided, which facilitates assembly thereof.

In this embodiment, the centrifugal part 24 is fixedly disposed on the positioning shaft sleeve 22. By attaching the centrifugal part 24 around the positioning shaft sleeve 22, the axial length and hence the overall length of the centrifugal friction clutch is reduced. Alternatively, the centrifugal part 24 can also be directly fixed on the rotary shaft 11, which is not described herein in detail and falls within the scope of the present invention.

Further, the positioning shaft sleeve 22 and the first stop plate 21 are formed into an integral structure. With the positioning shaft sleeve 22 and the first stop plate 21 formed into an integral structure, only one of the positioning shaft sleeve 22 and the first stop plate 21 needs to be fixed relative to the rotary shaft. In addition, this avoids separate fabrication and mounting of the positioning shaft sleeve 22 and the first stop plate and facilitates assembly thereof.

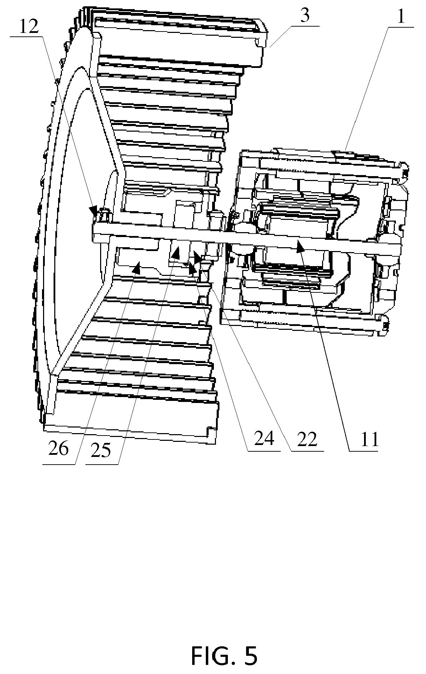

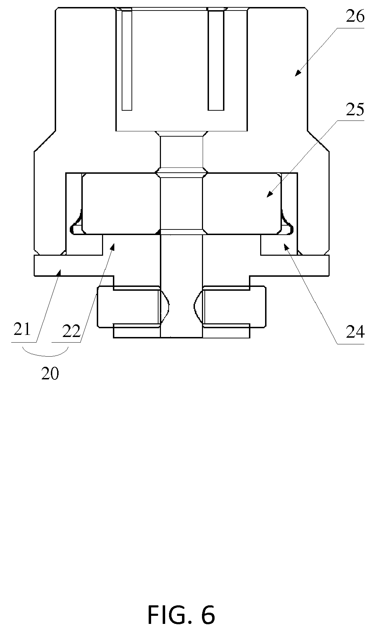

As shown in Fig. 5 and Fig. 6, in a second embodiment, the inner hole of the loading wheel 26 is a stepped hole having coaxially arranged large-diameter hole and small-diameter hole. The centrifugal part 24 is disposed within the large-diameter hole of the stepped hole. A step end face of the stepped hole contacts an end face of the centrifugal part 24 away from the first stop plate 21. The small-diameter hole allows the rotary shaft 11 to pass therethrough.

The positioning member 20 of this embodiment likewise includes the positioning shaft sleeve 22 for being fixed on the rotary shaft 11 and the first stop plate 21 fixedly connected with the positioning shaft sleeve 22.

In this embodiment, a positioning pressing block 25 is disposed inside the centrifugal plate 242 of the centrifugal part 24. One end face of the positioning pressing block 25 contacts the step end face of the stepped hole, and the other end face of the positioning pressing block 25 contacts an end face of the sleeve ring 241 that connects with the centrifugal plate 242. The positioning pressing block 25 supports the centrifugal plate 242 and prevents the centrifugal plate 242 from bending toward a center of the centrifugal part 24.

As shown in Fig. 4, an elastic groove 243 is formed at a connecting area between the centrifugal plate 242 and the sleeve ring 241. By providing the elastic groove 243, a thickness of the connecting area between the centrifugal plate 242 and the sleeve ring 241 is reduced, which more facilitates the tilting of the centrifugal plate 242 under the centrifugal force.

In this embodiment, the elastic groove 243 is located at an inner side of the connecting area between the centrifugal plate 242 and the sleeve ring 241. Alternatively, the elastic groove 243 may also be formed at an outer side of the connecting area between the centrifugal plate 242 and the sleeve ring 241.

Further, there is a plurality of the centrifugal plates 242 uniformly arranged on the sleeve ring 241. Through this configuration, the distribution of the frictional force between the centrifugal part 24 and the loading wheel 26 is made more uniform. Alternatively, at least one centrifugal plate 242 is provided.

One embodiment of the present invention further provides a motor assembly including a single phase motor 1 and a centrifugal friction clutch 2. The centrifugal friction clutch 2 is any one of the above-described centrifugal friction clutches. Since the above-described centrifugal friction clutches achieve the above-described technical results, the motor assembly employing the above-described centrifugal friction clutch can also achieve the same technical results, which are not described further herein one by one.

One embodiment of the present invention further provides a blower including an impeller 3 and a motor assembly. In order to facilitate the axial positioning of the impeller 3, the blower in accordance with the embodiment of the present invention further includes a position-limiting member 12 disposed on the rotary shaft 11 of the motor 1 to limit axial movement of the impeller 3. The position-limiting member 12 is disposed at one side of the centrifugal friction clutch 2 opposite from a main body of the motor 1.

As shown in Fig. 2, the position-limiting member 12 is configured to be a nut, and an end portion of the rotary shaft 11 is provided with threads for engaging with the nut. In an alternative embodiment, the position-limiting member 12 is positioned on the rotary shaft 11 with a fastening screw 13. In still another embodiment, the position-limiting member 12 may be configured to be a clip spring, and the end portion of the rotary shaft 11 is provided with a latching groove for engaging with the clip spring. These embodiments all fall within the scope of the present invention, which are not described further herein one by one.

Since the above-described motor assemblies achieve the above-described technical results, the blower employing the above-described motor assembly can also achieve the same technical results, which are not described further herein one by one. It should be noted that the motor assembly of the present invention is not only suitable for use in the blower, but it also suitable for use in other fluid driving devices such as a water pump.

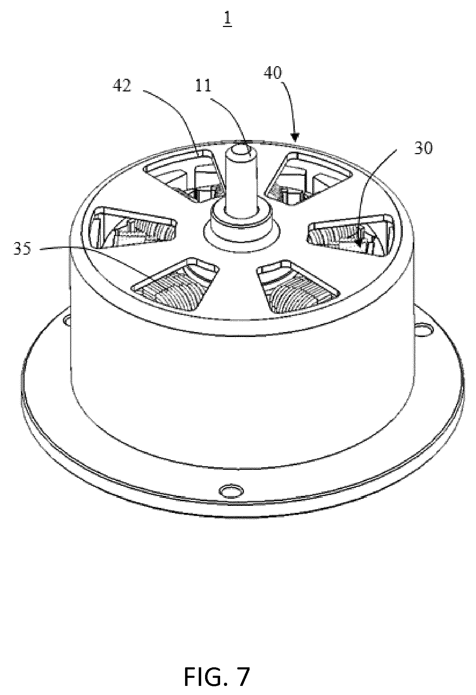

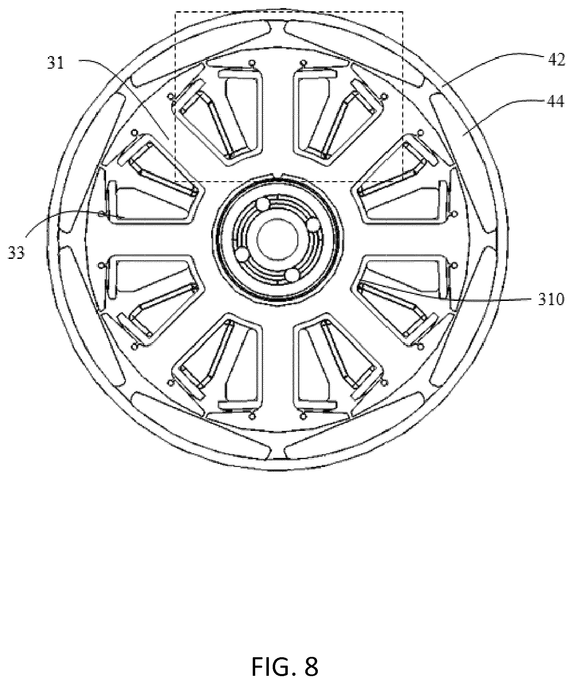

Referring to Fig. 7 to Fig. 9, the single phase motor in one embodiment of the present invention is an outer-rotor motor which includes a stator 30 and a rotor 40 surrounding the stator 30. In another embodiment, the single phase motor may also be an inner-rotor motor.

In this embodiment, the stator 30 includes a stator core 31 made from a magnetic-conductive material, an insulating bracket 33 attached around the stator core 31, and windings 35 wound around the insulating bracket 33.

The stator core 31 includes an annular portion 310 disposed at a center of the stator core 31, and a plurality of teeth extending radially outwardly from the annular portion 310. A winding slot is formed between each two adjacent teeth. Each tooth includes a tooth body 312 and a tooth tip 314 extending from a distal end of the tooth body 112 along a circumferential direction. Each two adjacent tooth tips 314 define therebetween a slot opening 315 of one corresponding winding slot. Preferably, each slot opening 315 has the same width in the circumferential direction. That is, the tooth tips are evenly arranged along the circumferential direction. Preferably, each tooth is symmetrical with respect to a radius of the motor that passes through a center of the tooth body of this tooth.

Preferably, outer surfaces 317 of the tooth tips 314, i.e. the surfaces opposite from the annular portion 310, are arc surface which form a pole face of the stator 30. Preferably, the outer surfaces 317 of the tooth tips 314 are located on a same cylindrical surface concentric with the rotary shaft 11. Inner surfaces 318 of the tooth tips 314, i.e. the surfaces facing toward the annular portion 310, are generally plane surfaces.

In some embodiments, slits 316 are formed in connecting corner areas between the tooth tip 314 and the tooth body 312. The provision of the slits 116 prevents creases during the process of bending the tooth tip 314 of the stator core 31. Specifically, two parts of the tooth tip 314 on opposite sides of the tooth body 312 extend radially outwardly in an initial state, such that the width of the insulating slot and slot opening 315 may be enlarged to facilitate winding of the windings 15. After the winding is completed, the two parts of the tooth tip 314 are bent inwardly about the slits 316 to a final position using a tool. It should be understood that, in some embodiments, the slit 116 may be formed only in a connecting corner area between the tooth body 112 and the part of the tooth tip 112 at a single side of the tooth body 112.

The rotor 40 includes the rotary shaft 11 passing through the annular portion 310, a rotor yoke 42 fixedly connected with the rotary shaft 11, and multiple permanent magnetic poles 44 disposed on an inner wall surface of the rotor yoke 42. Preferably, an inner surface 441 of the permanent magnetic pole 44 is a flat surface, such that fabrication of the permanent magnetic pole 44 can be simplified. It should be understood, however, that the inner surface of the permanent magnetic pole may also be an arc surface. Preferably, a pole-arc coefficient of the permanent magnetic pole 44, i.e. a ratio of the actual angle of the permanent magnetic pole 44 along the circumferential direction to the quotient of 360 degrees divided by the number of the rotor poles, is greater than 0.75, which can improve the cogging torque characteristics and enhance the motor efficiency.

The inner surface 441 of the permanent magnetic pole 44 is opposed to the outer surface 317 of the tooth tip 314, with an air gap 319 formed therebetween. A radial width of the gap 319 varies along a circumferential direction of the permanent magnetic pole 44, thus forming an uneven air gap. The radial width of the air gap 319 progressively increases from a circumferential center toward opposite circumferential ends of the inner surface of the permanent magnetic pole 44. As such, a radial distance between a circumferential center point of the inner surface of the permanent magnetic pole 44 and a cylindrical surface in which the outer surface of the tooth tip 314 is located is referred to as the minimum radial width of the air gap 319, and a radial distance between a circumferential end point of the inner surface of the permanent magnetic pole 44 and the cylindrical surface in which the outer surface of the tooth tip 314 is located is referred to as the maximum radial width of the air gap 319.

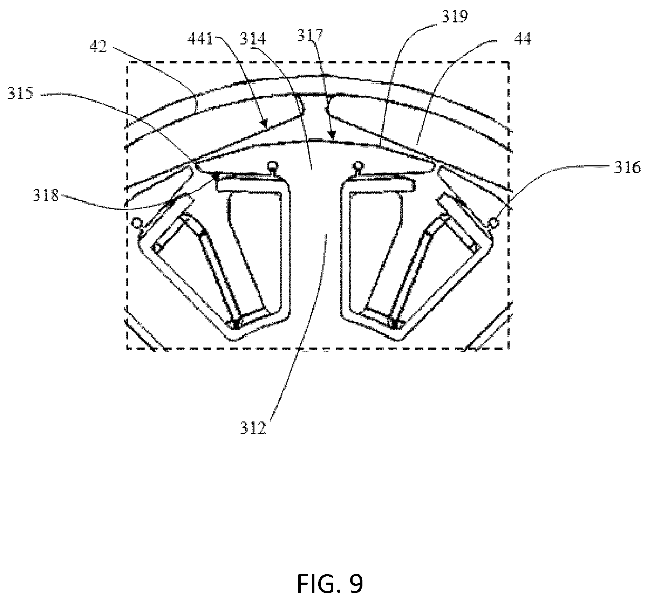

Preferably, a ratio of the maximum radial width to the minimum radial width of the air gap 119 is greater than 2, and a width (usually referring to the minimum width of the slot opening 315 in the circumferential direction) of the slot opening 315 is greater than or equal to zero, but less than or equal to five times of the minimum radial width of the air gap 319. Preferably, the width of the slot opening 315 is equal to or greater than the minimum radial width of the air gap 319, but less than or equal to three times of the minimum radial width of the air gap 319. Because of the above relationship between the slot opening 315 and the air gap 319, when the motor is not energized, the rotor 40 stops at the initial position shown in Fig. 9. This initial position is offset from a dead-point position, thereby avoiding the failure of starting the rotor when the motor is energized. In this embodiment, the rotor 40 stops at the initial position shown in Fig. 9 when the motor is not energized or powered off. At this initial position, a center line of the tooth body 312 of the stator core is aligned with a center line of the area between two adjacent rotor magnetic poles 44. This position deviates the furthest from the dead-point position, which can effectively avoid the failure of starting the rotor when the motor is energized. Due to other factors such as friction in practice, the center line of the tooth body 312 of the stator core may deviate from the center line of the area between two adjacent rotor magnetic poles 44 by an angle such as an angle of 0 to 30 degrees, but the stop position is still far away from the dead-point position.

In the above embodiments of the present invention, the rotor can be positioned at the initial position deviating from the dead-point position by the magnetic field produced by the rotor magnetic pole 44 itself. The cogging torque of the single-phase motor configured as such can be effectively suppressed, such that the motor has enhanced efficiency and performance. Experiments show that a peak of the cogging torque of a single-phase outer-rotor brushless direct current motor configured as above (with a rated torque of 1Nm, a rated rotation speed of 1000rpm, and a stack height of the stator core of 30mm) is less than 80mNm. The motor of the present invention can be designed with bidirectional startup capability according to needs. For example, the bidirectional rotation can be achieved by using two position sensors such as Hall sensors and an associated controller. It may also be designed to start up in a single direction, in which case only one position sensor is needed.

All embodiments in the specification are described in a progressive way, each embodiment mainly describes the differences from other embodiments, and the same and similar parts among the embodiments can be referenced mutually.

Although the invention is described with reference to one or more embodiments, the above description of the embodiments is used only to enable people skilled in the art to practice or use the invention. It should be appreciated by those skilled in the art that various modifications are possible without departing from the spirit or scope of the present invention. The embodiments illustrated herein should not be interpreted as limits to the present invention, and the scope of the invention is to be determined by reference to the claims that follow.

## Claims

1. A motor assembly comprising:
a single phase motor (1) comprising a stator (30) and a rotor (40); and
a friction clutch (2) comprising:
a pressing member (24) rotating with the rotor (40); and
a connecting member (26) to be connected to a load,
wherein when the pressing member (24) rotates, the pressing member (24) generates an axial or radial movement to thereby exert a pressing force to the connecting member (26) to cause the connecting member (26) to rotate due to a frictional force generated between the pressing member (24) and the connecting member (26).

2. The motor assembly according to claim 1, wherein the stator (30) comprises a stator core (31) and a winding (35) wound around the stator core (31), the stator (30) and the rotor (40) being radially spaced to define an air gap, the stator core (31) comprising a plurality of teeth extending radially outwardly, with each two adjacent teeth defining a winding slot there between, a radial end face of the tooth facing toward the rotor (40) forming a pole face, a circumferential distance between the pole faces of two adjacent teeth having a width less than five times of a minimum radial width of the air gap (319).

3. The motor assembly according to claim 2, wherein the circumferential distance between the pole faces of two adjacent teeth is between one to three times of the minimum radial width of the air gap (319),

4. The motor assembly according to any one of claim 1 to 3, wherein the motor is an inner-rotor motor, the rotor (40) comprises rotary shaft (11), a rotor core fixed to the rotary shaft, and a permanent magnet attached to the rotor core.

5. The motor assembly according to any one of claim 1 to 4, wherein the motor is an outer-rotor motor, the rotor comprises a rotary shaft (11), a magnetic-conductive housing (42) fixed to the rotary shaft (11), and a permanent magnet (44) attached to the magnetic-conductive housing (11).

6. The motor assembly according to any one of claim 1 to 5, wherein the friction clutch (2) is a centrifugal friction clutch (2), the pressing member (24) is a centrifugal body (24) when the rotor (40) rotates, the centrifugal body (24) generates a radial displacement under a centrifugal force, thereby directly or indirectly exerting the pressing force to the connecting member (26).

7. The motor assembly according to claim 5, wherein the centrifugal body (24) includes a sleeve ring (241) fixed relative to the rotor (40) and a plurality of centrifugal plates (242) disposed or formed on the sleeve ring (241), distal ends of the centrifugal plates (242) are free ends which flare radially outwardly and abut against the load connecting member (26).

8. The motor assembly according to claim 7, further comprising a fixing member (22) fixed on the rotor (40), and the sleeve ring (241) of the centrifugal body (24) is fixed on the fixing member (22).

9. The motor assembly according to claim 7 or 8, further comprising a positioning member (21) for axially positioning the connecting member (26).

10. The motor assembly according to any one of claim 7 to 9, further comprising a positioning pressing block (25) disposed within the centrifugal plates (242) to support the centrifugal plates (242).

11. The motor assembly according to any one of claim 7 to 10, wherein the plurality of centrifugal plates (242) extends from a circumference of the sleeve ring (241) in an axial direction of the motor (1).

12. The motor assembly according to claim 11, wherein a groove (243) is formed at a radial inner side at a joint between the centrifugal plate (242) and the sleeve ring (241) for facilitating the centrifugal plate (242) deforming and flaring outwardly.

13. A fluid driving device comprising a driving body (3) and a motor assembly according to any one of claim 1 to 12,
wherein the driving body (3) is connected with the single phase motor (1) through the friction clutch (2), and the driving body (3) and the connecting member (26) are connected or formed into an integral structure.

14. The fluid driving device according to claim 13, wherein the fluid driving device is a blower.
